# FASCICULE DE BREVET EUROPEEN

(11) **EP 3 358 280 B1**
(45) Date de publication et mention de la délivrance du brevet: **22.04.2020**
(21) Numéro de dépôt: 17305120.2
(22) Date de dépôt: 02.02.2017
(51) Int. Cl.: F25D 3/11, A23L 3/37, B65G 15/32

(54) **PROCÉDÉ ET DISPOSITIF DE SURGÉLATION CRYOGÉNIQUE DE PRODUITS**
VERFAHREN UND VORRICHTUNG ZUR KRYOGENISCHEN GEFRIERUNG VON PRODUKTEN
METHOD AND DEVICE FOR CRYOGENIC FREEZING OF PRODUCTS

(43) Date de publication de la demande: 08.08.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Bruggeman, Benny, B-9032 GENT (BE)
(74) Mandataire: Mellul-Bendelac, Sylvie Lisette

(56) Documents cités:
- EP-A1- 0 576 665
- EP-A1- 0 983 729
- JP-A- H0 799 950
- US-A- 6 009 719
- US-A1- 2012 047 915

## Description

La présente invention concerne un procédé et un dispositif de surgélation cryogénique de produits.

Il est bien connu que certains produits alimentaires sont très difficiles à surgeler et il est alors nécessaire d'utiliser un équipement de surgélation dont les qualités principales doivent être :
- Une surgélation rapide et sur une surface au sol aussi réduite que possible (machine aussi petite que possible).
- Une surgélation qui doit être aussi efficace pour la surface inférieure du produit que pour sa surface supérieure.
- Le procédé ne doit pas marquer la face inférieure des produits.
- Les produits ne doivent pas coller à la surface sur laquelle ils sont posés.
- Quand cela est nécessaire, l'équipement doit permettre de ne surgeler que la surface du produit et pas le cœur (et ainsi réaliser ce que l'on appelle dans cette industrie un « croutage »).

A titre d'exemple on peut citer les produits suivants : des filets de poissons recouverts de marinade, des produits pâteux (tels des purées de légume), ou encore des morceaux de viande enrobés de sauce.

Dans de tels cas de produits très difficiles à traiter, on a alors démontré que l'utilisation d'un surgélateur cryogénique utilisant un tapis polymère (par exemple un polyester), imbibé d'azote liquide par pulvérisation ou s'imprégnant d'azote liquide en passant dans un bain d'azote liquide est particulièrement bien adapté. Un tel équipement est décrit dans le document EP-576 665.

Selon cette technique antérieure, la taille des pores du tapis convoyeur est telle que du liquide cryogénique puisse y être retenu, de manière à assurer la congélation totale ou partielle de l'article par transfert thermique entre l'article et le liquide cryogénique retenu dans le support poreux.

Pour réaliser cette opération avec succès, le tapis polyester sur lequel les produits à croûter sont déposés doit convoyer correctement les produits à travers le surgélateur et en particulier, il doit impérativement assurer un temps de passage régulier dans le surgélateur et dans le bain d'azote liquide. Par temps de passage régulier on entend un temps de passage constant i.e sensiblement constant au cours d'une phase de production, ou au cours d'une journée, quel que soit le produit traité, le lot traité etc...

La deuxième condition de la réussite de l'opération est une immersion régulière dans le bain d'azote liquide, tous les produits étant immergés dans une hauteur sensiblement constante d'azote liquide.

Lors de précédents travaux la Demandeur avait mis en évidence le fait que dans certaines situations, un tel surgélateur à immersion d'un tapis polymère dans un bain de cryogène nécessitait des améliorations de conception. Une partie des difficultés venaient de la nature polymère du convoyeur (qui présente par ailleurs on le sait de considérables avantages), on n'observe pas ces inconvénients spécifiques avec un tapis métal : en effet, l'entraînement d'un tapis métal est « positif » (par des systèmes de pignons qui ne peuvent pas glisser) alors que dans le cas d'un tapis polymère on met nécessairement en œuvre un tambour lisse qui entraîne un tapis lisse.

Et tandis qu'un tapis métal est parfaitement rigide, un tapis polymère va nécessairement subir des déformations lors de son passage dans le bain.

Ces travaux antérieurs avaient alors pointé le fait que la précision et l'efficacité du procédé résident notamment dans la maîtrise de deux points :
- la régularité du temps de passage dans le surgélateur ;
- la régularité de la profondeur du bain d'azote liquide rencontrée par le produit.

Pour satisfaire à la première condition, la vitesse du tapis doit être stable et bien contrôlée.

Pour la deuxième condition, durant toute la période (par exemple la journée) de production, le bain d'azote liquide doit avoir une hauteur sensiblement constante et le convoyeur doit passer bien à plat dans ce bain, à une distance sensiblement constante de la surface du bain. Ainsi, quel que soit le moment de la journée, quelle que soit la position des produits, ils reçoivent tous le même traitement thermique car ils sont immergés dans l'azote liquide de manière sensiblement identique.

A titre d'exemple on conçoit que si le tapis convoyeur n'est pas bien plat, et qu'il présente par exemple une « bosse » en son milieu, les produits qui sont immergés dans l'azote liquide à cet endroit ne seront pas surgelés de façon comparable à des produits qui passeront dans le bain sur les bords du tapis convoyeur, là où ce convoyeur descend plus profondément à l'intérieur du bain.

On constatait notamment les deux défauts suivants :
- Le glissement de la bande sur son tambour d'entraînement d'où un temps de passage variable et insuffisamment maîtrisé.
- La déformation du tapis convoyeur dans le bac d'immersion d'azote : le tapis ne reste pas parfaitement plat dans le bain car des bulles d'azote gazeux se forment sous le tapis et le font gonfler dans sa partie centrale alors que les bords restent en place au fond du bac. De plus, la tension de la bande a aussi tendance à soulever le tapis en son centre alors que les bords restent en place au fond du bain.

Le Demandeur avait alors proposé dans le document WO2009/019361 une nouvelle solution technique aux problématiques listées plus haut où le dispositif comprend des moyens de placage de la bande sur l'un des tambours qui maintient en place le convoyeur à bande poreuse dans le dispositif.

Le Demandeur a alors constaté en poursuivant ses travaux sur ce type d'équipement à tapis poreux qu'il était nécessaire d'apporter d'autres améliorations pour répondre à la problématique suivante : en effet, les modes d'imprégnation du tapis dans les équipements actuellement utilisés, qu'il s'agisse d'imprégnation par pulvérisation (spray) ou d'immersion du convoyeur dans un bain de cryogène, entrainent de très grandes pertes de cryogène et donc une consommation inutilement élevée.

Ceci est du au fait que lorsque le tapis est imprégné à son maximum, une bonne part de ce cryogène va rapidement s'écouler hors du tapis vers le bas de l'équipement (typiquement dans une auge de récupération), ne participant alors absolument pas au refroidissement des produits.

Il faut souligner également le fait qu'un tapis qui a été imprégné de cryogène subit, lorsqu'il progresse à l'intérieur de l'équipement, des changements de direction mais aussi des effets d'essorage, par exemple lorsqu'il s'enroule autour d'un tambour, changements qui vont nécessairement entrainer des pertes de cryogène par rapport à une situation où le tapis resterait bien horizontal dans l'espace.

En tout état de cause ce cryogène est perdu.

Le document US 2012/047915 A1 divulgue le préambule de l'invention.

La présente invention vise alors notamment à proposer une solution technique à cette problématique de perte de cryogène.

Comme on le verra plus en détails dans ce qui suit, la présente invention met en œuvre les caractéristiques et avantages suivants :
- on positionne un ou plusieurs containers successifs, contenant le cryogène liquide, par exemple de l'azote liquide, sous le tapis poreux convoyeur (i.e sous le « brin » supérieur entrant dans le dispositif), et en aval de la zone de dépose des produits à traiter sur le tapis.
- le tapis, où sont disposés les produits à traiter, passe alors au dessus du ou des conteneurs successifs d'azote liquide, où il affleure la surface de cryogène liquide, container(s) dont on régule le niveau de cryogène liquide.
- les produits sont déposés sur le tapis qui est encore sous-refroidi (phénomène lié au retour du tapis, vers l'entrée du dispositif, via les tambours d'entrainement, après traitement d'une charge de produits) .
- on peut raisonnablement considérer qu'avec une telle configuration, le degré d'absorption de liquide cryogénique par le tapis va dépendre du fait qu'il est plus ou moins "sec" selon les zones, et notamment selon qu'une zone supportait ou non précédemment un produit, une zone encore humide n'absorbera pas ou quasiment pas d'avantage de cryogène, tandis qu'une zone sèche en absorbera.
- on peut également considérer que le niveau de cryogène dans le ou les containers successifs étant maintenu constant, l'apport de cryogène dans le ou les bacs dépend directement de la quantité de produits traitée.
- on peut également considérer que la régulation (maintien) du niveau de cryogène dans le ou les bacs, participe au fait de maintenir la qualité de la congélation, totale ou partielle (« croutage ») réalisée.
- par ailleurs, le tapis ne subissant pas d'immersion dans un bain de cryogène, il ne subit aucune turbulence et reste sensiblement horizontal.

Tout ceci incontestablement va mener à des économies de consommation de cryogène par rapport aux solutions antérieures d'imprégnation totale par spray ou bien de plongée totale du tapis dans un bain de cryogène ;

La solution ci-dessus décrite a démontré en effet une économie d'environ un tiers de cryogène par rapport aux consommations antérieures (en kg de cryogène par kg de produit traité).

La présente invention concerne alors un dispositif pour la congélation totale ou partielle d'articles, comportant un convoyeur en un matériau poreux isolé par une enceinte, ainsi que des moyens d'imprégnation en un liquide cryogénique dudit convoyeur, et des moyens permettant de disposer des articles à congeler sur le convoyeur poreux, se caractérisant par la mise en œuvre des mesures suivantes :
- il comporte un ou plusieurs containers successifs, apte(s) à contenir le liquide cryogénique, par exemple de l'azote liquide, positionné(s) sous le convoyeur poreux, et en aval de la zone des moyens de dépose des articles à congeler sur le convoyeur.
- il comporte des moyens de régulation du niveau de liquide dans le ou les containers, pour permettre que le convoyeur, où sont disposés les articles à traiter, puisse passer au dessus du ou des containers successifs, et affleurer la surface de liquide cryogénique.

L'invention concerne également un procédé pour congeler totalement ou partiellement un article, comprenant la mise en œuvre des mesures suivantes :
- on dispose d'un convoyeur en un matériau poreux isolé par une enceinte ;
- on dispose de moyens de dépose des articles à congeler sur le convoyeur ;
- on dispose d'un ou plusieurs containers successifs, apte(s) à contenir un liquide cryogénique, par exemple de l'azote liquide, positionné(s) sous le convoyeur poreux, et en aval de la zone des moyens de dépose des articles à congeler sur le convoyeur ;
- on fait circuler le convoyeur, où sont disposés les articles à traiter, au dessus du ou des containers successifs, où celui-ci affleure la surface de liquide cryogénique ;
- on régule le niveau de liquide dans le ou les containers.

## Revendications

1. Dispositif pour la congélation totale ou partielle d'articles, comportant un convoyeur isolé par une enceinte, ainsi que des moyens d'imprégnation avec un liquide cryogénique dudit convoyeur, et des moyens permettant de déposer des articles à congeler sur le convoyeur poreux, le dispositif comporte un ou plusieurs containers successifs, apte(s) à contenir le liquide cryogénique, par exemple de l'azote liquide, positionné(s) sous le convoyeur poreux et en aval d'une zone comportant les moyens de dépose des articles à congeler sur le convoyeur, **se caractérisant en ce que** le convoyeur est en matériau poreux; et **en ce que** le dispositif comporte des moyens de régulation du niveau de liquide dans le ou les containers, pour permettre au convoyeur, où sont disposés les articles à traiter, de pouvoir passer au-dessus du ou des containers successifs, et d' affleurer la surface de liquide cryogénique.

2. Procédé pour congeler totalement ou partiellement un article, comprenant la mise en œuvre des mesures suivantes :
- on dispose d'un convoyeur isolé par une enceinte ;
- on dispose de moyens de dépose des articles à congeler sur le convoyeur ;
- on dispose d'un ou plusieurs containers successifs, apte(s) à contenir un liquide cryogénique, par exemple de l'azote liquide, positionné(s) sous le convoyeur poreux, et en aval d'une zone des moyens de dépose des articles à congeler sur le convoyeur ;
**se caractérisant en ce que** :
- le convoyeur est en matériau poreux;
- on fait circuler le convoyeur, où sont disposés les articles à traiter, au dessus du ou des containers successifs, où le convoyeur affleure la surface de liquide cryogénique ;
- on régule le niveau de liquide dans le ou les containers.

## Patentansprüche

1. Vorrichtung zum vollständigen oder teilweisen Gefrieren von Produkten, einen durch ein Gefäß isolierten Förderer, sowie Mittel zum Imprägnieren des Förderers mit einem kryogenen Fluid, und Mittel beinhaltend, die es ermöglichen, zu gefrierende Produkte auf dem porösen Förderer abzulegen, wobei die Vorrichtung einen oder mehrere aufeinanderfolgende Behälter beinhaltet, der (die) imstande ist (sind), das kryogene Fluid, beispielsweise flüssigen Stickstoff zu enthalten, der (die) unter dem porösen Förderer und stromabwärts einer Zone positioniert ist (sind), die die Mittel zum Ablegen der zu gefrierenden Produkte auf den Förderer beinhaltet,
**dadurch gekennzeichnet, dass** der Förderer aus einem porösen Material ist; und dadurch, dass die Vorrichtung Mittel zum Regeln der Flüssigkeitsstufe in dem oder den Behälter(n) beinhaltet, um es dem Förderer, auf dem die zu verarbeitenden Produkte abgelegt sind, zu ermöglichen, über den oder die aufeinanderfolgenden Behälter zu verfahren, und die Oberfläche eines kryogenen Fluids leicht zu berühren.

2. Vorrichtung zum vollständigen oder teilweisen Gefrieren eines Produkts, das Umsetzen der folgenden Maßnahmen umfassend:
- man verfügt über einen durch ein Gefäß isolierten Förderer;
- man verfügt über Mittel zum Ablegen der zu gefrierenden Produkte auf den Förderer;
- man verfügt über einen oder mehrere aufeinanderfolgende Behälter, der (die) imstande ist (sind), das kryogene Fluid, beispielsweise flüssigen Stickstoff zu enthalten, der (die) unter dem porösen Förderer und stromabwärts einer Zone der Mittel zum Ablegen der zu gefrierenden Produkte auf den Förderer positioniert ist (sind);
**dadurch gekennzeichnet, dass**:
- der Förderer aus einem porösen Material ist;
- man den Förderer zirkulieren lässt, wo die zu behandelnden Produkte oberhalb des oder der aufeinanderfolgenden Behälter abgelegt sind, wo der Förderer die Oberfläche des kryogenen Fluids leicht berührt;
- man die Flüssigkeitsstufe in dem oder den Behälter(n) regelt.

## Claims

1. Device for the total or partial freezing of articles, comprising a conveyor insulated by an enclosure, as well as means for impregnation with a cryogenic liquid of said conveyor, and means making it possible to deposit articles to be frozen on the porous conveyor, the device comprises one or more successive containers, able to contain the cryogenic liquid, for example liquid nitrogen, positioned under the porous conveyor and downstream of a zone comprising means for depositing articles to be frozen on the conveyor,
**characterised in that** the conveyor is made of a porous material; and **in that** the device comprises means for regulating the level of liquid in the container or containers, in order to make it possible for the conveyor, where the articles to be treated are deposited, to be able to pass above the successive container or containers, and to be flush with the surface of cryogenic liquid.

2. Method for the total or partial freezing of an article, comprising the implementation of the following measures:
- there is a conveyor insulated by an enclosure;
- there are means for depositing articles to be frozen on the conveyor;
- there are one or more successive containers, able to contain a cryogenic liquid, for example liquid nitrogen, positioned under the porous conveyor, and downstream from a zone of the means for depositing articles to be frozen on the conveyor;
**characterised in that**:
- the conveyor is made from a porous material;
- the conveyor, where the articles to be treated are deposited, is made to circulate over the successive container or containers, where the conveyor is flush with the surface of cryogenic liquid;
- the level of liquid in the container or containers is regulated.
